# EUROPEAN PATENT SPECIFICATION

(11) **EP 4 588 153 B1**
(45) Date of publication and mention of the grant of the patent: **25.03.2026**
(21) Application number: 23762533.0
(22) Date of filing: 05.09.2023
(51) Int. Cl.: H02J 50/12, H02J 50/80

(54) **WIRELESS POWER TRANSFER**
DRAHTLOSE STROMÜBERTRAGUNG
TRANSFERT D'ÉNERGIE SANS FIL

(30) Priority: 12.09.2022 EP 22195224
(43) Date of publication of application: 23.07.2025
(73) Proprietor: Koninklijke Philips N.V., 5656 AG Eindhoven (NL)
(72) Inventor: DRAAK, Johannes Wilhelmus, 5656 AG Eindhoven (NL); ETTES, Wilhelmus Gerardus Maria, 5656 AG Eindhoven (NL); MUELLER, Max-Felix, 5656 AG Eindhoven (NL); EGENTER, Christian Otto, 5656 AG Eindhoven (NL)
(74) Representative: Philips Intellectual Property & Standards
(86) International application number: PCT/EP2023/074214
(87) International publication number: WO 2024/056433

(56) References cited:
- WO-A1-2016/041880
- US-A1- 2018 366 984

## Description

### FIELD OF THE INVENTION

The invention relates to a wireless power transfer and in particular, but not exclusively, to the operation of a power transmitter and power receiver supporting wireless transfer for typically high power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2 KW.

Furthermore, power receivers such as many kitchen appliances and devices may have several operational modes which may have very different power levels, for example the device may include several different loads that can be switched on or off. As a specific example, an Airfryer appliance may switch the heating element on and off resulting in typical load steps between e.g. 50 to 1200W. Such load changes may be e.g. be repeated during operation of the Airfryer in order to maintain reasonably constant temperature.

Systems may also have non-linear loads, for example instead of a resistive component, a load may be e.g. a motor having a significant reactance (e.g. a food processor appliance). Such non-linear loads may result in a completely different response of the system and may have a large impact on the control system design.

Normally the system uses a control loop to compensate for load variations and to ensure that the right operating point is reached. This control loop will adapt the amount of power that is transmitted to the power receiver/ device. The received power (or voltage or current) can be measured by the power receiver in connection with a the setpoint power value, an error signal can be determined. The power receiver may transmit this error signal to the control system in the power transmitter which may adapt the power level to ideally reduce the static error to zero.

Although such a control loop may provide advantageous and suitable operation in many scenarios. However, ideal performance cannot be achieved in all situations. For example, a control loop will inherently have a dynamic performance that is a trade-off between response time on one hand and accuracy and noise performance on the other hand. Practical control loops will tend to have non-ideal transient response and tend to not provide ideal adaptation when significant load changes and steps occur.

Further, the resulting system response and power transfer function may typically result in voltage changes and transients being induced at the power receiver. Such transients may in some cases result in an output voltage varying significantly when load steps occur, and this may in particular result in overvoltage conditions potentially occurring. Such transients and voltage variations may be undesired in many situations.

Hence, an improved operation and approach for a power transfer system would be advantageous and, in particular, an approach allowing increased flexibility, reduced cost, reduced complexity, improved backwards compatibility, improved suitability for higher power level transfers, improved adaptation to specific operating conditions, improved adaptation to power receiver load variations, changes, and/or steps, improved adaptation to varying operating conditions, reduced voltage/ current variations, reduced overvoltage/ current conditions, and/or an improved performance would be advantageous.

US 2018/366984 A1 describes an example of a wireless power system with functions to adapt the drive frequency.

WO 2016/041880 A1 describes example of a wireless power system with functions to adapt the drive frequency and the resonance frequency.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an inductive power transfer signal; the power transmitter comprising: an output resonance circuit comprising a transmitter coil and at least one capacitor; a driver arranged to generate a drive signal for the output resonance circuit to generate the inductive power transfer signal; a frequency determiner arranged to provide a reduced load sensitivity operating frequency for the drive signal, a receiver arranged to receive a load change message from the power receiver, the load change message being indicative of a load change by the power receiver being upcoming; a frequency controller arranged to change an operating frequency of the drive signal to the reduced load sensitivity operating frequency in response to receiving the load change message; a transmitter arranged to transmit a load change acknowledge message to the power receiver, the load change acknowledge message being indicative of the frequency controller having changed the operating frequency to the reduced load sensitivity operating frequency; wherein the frequency controller is further arranged to change the operating frequency from the reduced load sensitivity operating frequency to a load dependent operating frequency in response to determining that the power receiver has performed the load change.

The invention may provide improved power transfer in many embodiments. In many embodiments, it may provide improved load change performance and operation. In many scenarios, it may reduce the impact of load changes, and in particular of large and/or fast load changes. In many scenarios, it may reduce over-voltage and/or over-current conditions in connection with load changes and load steps. The approach may allow improved transient performance for load changes and load steps. The approach may reduce cost in many scenarios. It may facilitate implementation and/or provide improved backwards compatibility in many embodiments.

The reduced load sensitivity operating frequency may in some embodiments be a substantially minimum load sensitivity operating frequency. The minimum may be a global or local minimum. The reduced load sensitivity operating frequency may be a frequency having a lower sensitivity to load variations than for any frequency belonging to an operating frequency range. The operating frequency range may be a power control loop operating frequency, e.g. representing a range of operating frequencies that may be set by the power control loop. The sensitivity may be a sensitivity of a power transfer parameter, such as e.g. a rectified and smoothed induced power receiver coil voltage and/or current, a power level, a drive signal voltage/current/power/phase, a power receiver load voltage, etc., to a variation/change in load of the power transfer signal/ drive signal, and often to a variation/ change in a load of the power receiver.

In some embodiments, the reduced load sensitivity operating frequency may be a frequency for which a change of an output voltage of the input resonance circuit of the power receiver as a function of a change in a loading of the input resonance circuit is reduced relative to a range of power control operating frequencies (a range of frequencies that the drive signal may be controlled to have by the power control loop).

In some embodiments, the reduced load sensitivity operating frequency may be a frequency for which a change of an output voltage of the input resonance circuit of the power receiver as a function of a change in a loading of the input resonance circuit has a local minimum, and in some cases a global minimum.

In some embodiments, the reduced load sensitivity operating frequency may be a frequency for which a change of an output voltage of the input resonance circuit of the power receiver as a function of a change in a loading of the input resonance circuit has a local minimum, and in some cases a global minimum.

The above may be particularly suitable for embodiments, where the input resonance circuit of a power receiver is a series resonance circuit. In such a circuit, the receiver coil of the input resonance circuit, the capacitor of the input resonance circuit, and the load may be coupled in series. In such a circuit, the current through the load, the receiver coil of the input resonance circuit, and a capacitor of the input resonance circuit is the same.

In some embodiments, the reduced load sensitivity operating frequency may be a frequency for which a change of an output current of the input resonance circuit of the power receiver as a function of a change in a loading of the input resonance circuit is reduced relative to a range of power control operating frequencies (a range of frequencies that the drive signal may be controlled to have by the power control loop).

In some embodiments, the reduced load sensitivity operating frequency may be a frequency for which a change of an output current of the input resonance circuit of the power receiver as a function of a change in a loading of the input resonance circuit has a local minimum, and in some cases a global minimum.

In some embodiments, the reduced load sensitivity operating frequency may be a frequency for which a change of an output current of the input resonance circuit of the power receiver as a function of a change in a loading of the input resonance circuit has a local minimum, and in some cases a global minimum.

The above may be particularly suitable for embodiments, where the input resonance circuit of a power receiver is a parallel resonance circuit. In such a circuit, the receiver coil of the input resonance circuit, the capacitor of the input resonance circuit, and the load may be coupled in parallel. In such a circuit, the voltage over the load, the receiver coil of the input resonance circuit, and a capacitor of the input resonance circuit is the same.

In some embodiments, the reduced load sensitivity operating frequency may be a frequency of a coupled resonance frequency for the output resonance frequency of the power transmitter and an input resonance circuit of the power receiver.

In accordance with an optional feature of the invention, the power transmitter comprises a power controller arranged to implement a frequency power control loop by adapting the operating frequency in response to power control error messages received from the power receiver, and wherein the power controller is arranged to suspend the frequency power control loop in response to receiving the load change message and to restart the frequency power control loop in response to the frequency controller determining that the power receiver has performed the load change.

The approach may allow improved performance and/or operation and/or implementation for a wireless power transfer system. The feature may for example allow reduced transient impacts from load steps.

In accordance with an optional feature of the invention, the frequency controller is arranged to determine that the power receiver has performed the load change in response to at least one of: an expiry of a timer; a detection of a change of power extracted from the power transfer signal; a detection of a power level change of the drive signal; and the receiver receiving a load change performed message from the power receiver.

The approach may allow improved performance and/or operation and/or implementation for a wireless power transfer system.

In accordance with an optional feature of the invention, the reduced load sensitivity operating frequency is a resonance frequency of a transfer function for the power transfer.

This may provide an efficient and/or reliable determination of a suitable reduced load sensitivity operating frequency. A particular advantage of the approach is that it in many embodiments may be power transmitter based with no specific estimation process or calculation necessarily being performed at the power receiver. This may reduce cost in many scenarios. It may facilitate implementation and/or provide improved backwards compatibility.

In accordance with an optional feature of the invention, the frequency determiner is arranged to determine the reduced load sensitivity operating frequency as a coupled resonance frequency for the output resonance circuit, the coupled resonance frequency being a resonance frequency for the output resonance circuit for the transmitter coil being coupled to a receiver coil of a power transfer input resonance circuit of the power receiver.

This may provide particularly advantageous operation in many embodiments.

The coupled resonance frequency may be a resonance frequency of the output resonance circuit when this is coupled to the receiver coil and when the power receiver is in a power transfer position for the power transfer.

In some embodiments, the power transfer input resonance circuit has a quality factor of no less than 20, 50, 100, or even 500 during the resonance measurement time interval.

A coupled resonance frequency for the output resonance circuit corresponds to a resonance frequency for the drive signal, and may specifically correspond to a local maximum (or possibly a local minimum) for a property of the drive signal for varying frequencies of the drive signal.

In some embodiments, the frequency determiner is arranged to determine the reduced load sensitivity operating frequency as a coupled resonance frequency for the output resonance circuit (during a resonance measurement time interval), the coupled resonance frequency being a resonance frequency for the output resonance circuit for the transmitter coil being coupled to a receiver coil of a power transfer input resonance circuit of the power receiver, the power transfer input resonance circuit having a quality factor of no less than 5, 10, 15, 20, 50 or even 100 (during the resonance measurement time interval).

In accordance with an optional feature of the invention, the frequency determiner is arranged to control the driver to generate the drive signal to have a varying frequency and to determine the coupled resonance frequency dependent on at least one of a voltage of the drive signal, a current of the drive signal, and a phase difference between the voltage of the drive signal and the current of the drive signal.

This may provide a particularly advantageous approach and may lead to a highly effective and practical determination of a suitable reduced load sensitivity operating frequency.

In accordance with an optional feature of the invention, the frequency determiner is arranged to control the driver to perform a frequency sweep of the drive signal from higher frequencies towards lower frequencies, and to determine the coupled resonance frequency as a first detected frequency for which a resonance criterion for the drive signal is met.

This may in many embodiments provide improved detection of a coupled resonance frequency for the output resonance circuit and thus of a reduced load sensitivity operating frequency, thus leading to improved power transfer operation.

In some embodiments, the frequency determiner may be arranged to control the driver to perform a frequency sweep of the drive signal from lower frequencies towards higher frequencies, and to determine the coupled resonance frequency as a first detected frequency for which a resonance criterion for the drive signal is met.

In accordance with an optional feature of the invention, the frequency determiner is arranged to initiate determination of the reduced load sensitivity operating frequency in response to the detection of a change in an operating point of the power transfer.

This may provide particularly advantageous operation in many embodiments.

In accordance with an optional feature of the invention, the frequency determiner is arranged to determine the reduced load sensitivity operating frequency as a predetermined function of at least one power transfer parameter.

This may provide particularly advantageous operation in many embodiments. It may allow facilitated operation and/or implementation in many scenarios.

In accordance with an optional feature of the invention, the power controller is further arranged to implement a non-frequency power control loop by adapting a parameter of the drive signal other than the operating frequency in response to power control error messages received from the power receiver when the drive signal is operated at the reduced load sensitivity operating frequency.

This may allow improved performance in many embodiments and may allow an improved compromise between adaptability and load change transient performance.

In accordance with another aspect of the invention, there is provided a power receiver for a wireless power transfer system comprising a power transmitter transferring power to the power receiver using an inductive power transfer signal, the power receiver comprising: an input resonance circuit comprising at least one capacitor and a power receiver coil arranged to extract power from the power transfer signal by induction to provide power to a variable load; a determiner arranged to determine that a load change for the variable load is upcoming; a transmitter arranged to transmit a load change message to the power transmitter, the load change message being indicative of the load change being upcoming; a receiver arranged to receive a load change acknowledge message from the power transmitter, the load change acknowledge message being indicative of the power transmitter having changed an operating frequency of the power transfer signal to a reduced load sensitivity operating frequency; a load controller arranged to initiate the load change in response to receiving the load change acknowledge message.

In some embodiments, the transmitter of the power receiver may be arranged to transmit a load change performed message to the power transmitter following the load change. The load change performed message is indicative of the load change having been performed.

The load may be coupled to the output of the resonance circuit via a power path that includes a rectification, and possibly a smoothing of the output signal of the input resonance circuit of the power receiver.

The comments provided with respect to the power transmitter also apply, mutatis mutandis, to the power receiver.

In many embodiments, the input resonance circuit may be a series resonance circuit. In many embodiments, the input resonance circuit may be a parallel resonance circuit.

In accordance with another aspect of the invention, there is provided a wireless power transfer system comprising a power transmitter and a power receiver as described above.

In accordance with another aspect of the invention, there is provided a method of operation for a power transmitter wirelessly providing power to a power receiver via an inductive power transfer signal; the power transmitter comprising: an output resonance circuit comprising a transmitter coil and at least one capacitor; and the method comprising: generating a drive signal for the output resonance circuit to generate the inductive power transfer signal; providing a reduced load sensitivity operating frequency for the drive signal, receiving a load change message from the power receiver, the load change message being indicative of a load change by the power receiver being upcoming; changing an operating frequency of the drive signal to the reduced load sensitivity operating frequency in response to receiving the load change message; transmitting a load change acknowledge message to the power receiver, the load change acknowledge message being indicative of the frequency controller having changed the operating frequency to the reduced load sensitivity operating frequency; and changing the operating frequency from the reduced load sensitivity operating frequency to a load dependent operating frequency in response to determining that the power receiver has performed the load change.

In accordance with another aspect of the invention, method of operation for a power receiver of a wireless power transfer system comprising a power transmitter arranged to transfer power to the power receiver using an inductive power transfer signal, the method comprising: extracting power from the power transfer signal by induction to provide power to a variable load; determining that a load change for the variable load is upcoming; transmitting a load change message to the power transmitter, the load change message being indicative of the load change being upcoming; receiving a load change acknowledge message from the power transmitter, the load change acknowledge message being indicative of the power transmitter having changed an operating frequency of the power transfer signal to a reduced load sensitivity operating frequency; and initiating the load change in response to receiving the load change acknowledge message.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
Fig. 1 illustrates an example of elements of a power transfer system in accordance with some embodiments of the invention;
Fig. 2 illustrates an example of an equivalence circuit for the power transfer system of Fig. 1;
Fig. 3 illustrates an example of elements of a power transmitter in accordance with some embodiments of the invention;
Fig. 4 illustrates an example of a half bridge inverter for a power transmitter;
Fig. 5 illustrates an example of a full bridge inverter for a power transmitter;
Fig. 6 illustrates an example of elements of a power receiver in accordance with some embodiments of the invention;
Fig. 7 illustrates an example of a power transfer function;
Fig. 8 illustrates an example of a power transmitter coil current and power receiver output voltage as a function of frequency;
Fig. 9 illustrates an example of a time frame for the wireless power transfer system of Fig. 1.

### DETAILED DESCRIPTION OF EMBODIMENTS

The following description focuses on embodiments of the invention applicable to a wireless power transfer system utilizing a power transfer approach such as known from the Qi Specification or the Ki Specification. However, it will be appreciated that the invention is not limited to this application but may be applied to many other wireless power transfer systems.

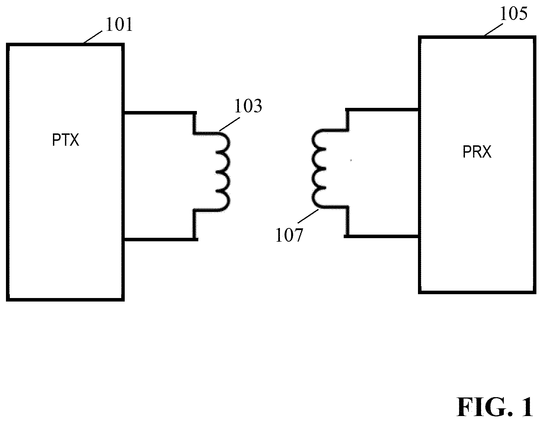

Fig. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the baseline power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Qi or Ki Specifications (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1, 1.2 or 1.3 (except for the herein described (or consequential) modifications and enhancements).

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

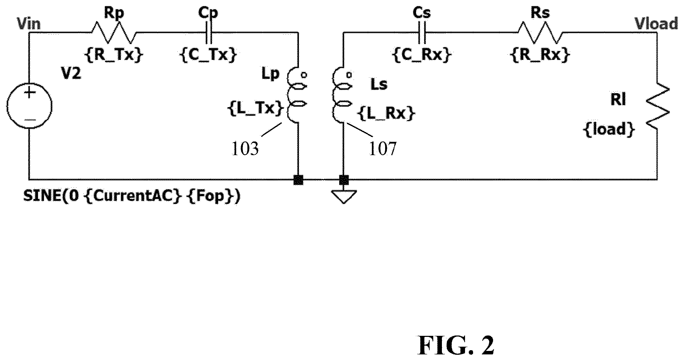

An example of an electrical equivalence diagram for the power transfer function of the power transmitter 101 and the power receiver 105 is illustrated in Fig. 2. A wide range of power transmitters and power receivers may exist in a given system and these may have substantially different properties and parameters. For example, the coil sizes, induction values, and loads may vary substantially. Accordingly, the system parameters, as specifically represented in Fig. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

Furthermore, the power receiving devices may have several different modes in which they operate, such as for example with several loads being switched on or off in different modes. For example, for the power receiver being an airfryer appliance, the heating element can be turned on and off. This may e.g. results in a very substantially load step from, say, 50 to 1200W and vice versa. Further, such load switching may be repeated during operation of the device to keep the temperature constant. Systems can also contain non-linear loads, e.g. rather than a resistive component, the power receiver may drive a motor, such as e.g. a motor of a food processor. This results in a completely different response of the system, and this has a large impact on specifically the control system design.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The appliance sends this error signal, or possibly the desired power setpoint, to the power control function in the power transmitter to reduce the static error, ideally to zero.

However, since the system performance and operation vary greatly depending on the existing power transmitter and power receiver combination and placements, the appropriate operating point also varies greatly. This includes the conditions at start-up/ initialization of a power transfer, and thus the optimum initial operating point also varies greatly.

A significant issue for power transfer systems is the adaptability to load variations. In practice, power receivers, such as kitchen appliances, may change the loads very drastically and very quickly. Adapting to such load steps and changes tends to be very difficult due to the inherent lag and relatively low response times of a control loop that is based on the power receiver transmitting error messages to the power transmitter. A phenomenon that may occur in some scenarios is that an overvoltage condition may result in response to a load step. The induced voltage at the power receiver may exhibit a step change-increase until the system stabilizes at the new operating point. Such a voltage transient may be undesirable for many devices and scenarios, In the following, an approach will be described that may in particular allow improved operation in connection with load changes. The approach will be described with reference to Fig. 1 and the power transmitter and power receiver thereof.

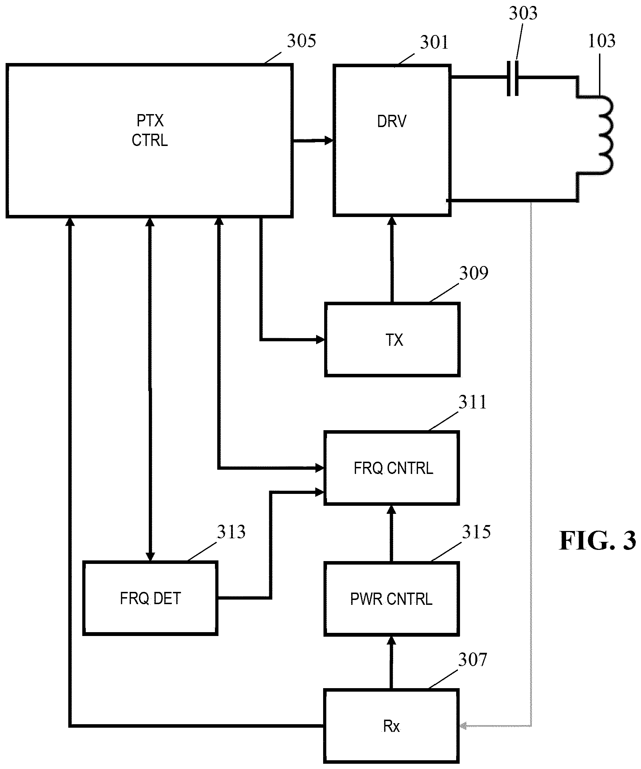

Fig. 3 illustrates elements of the power transmitter 101 of Fig. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one including multiple inductors and/or capacitors.

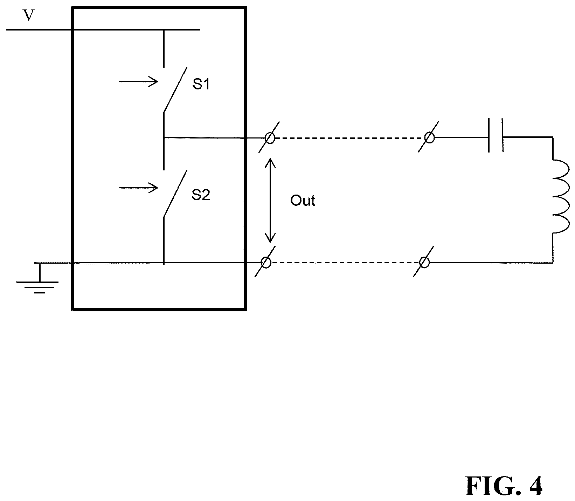

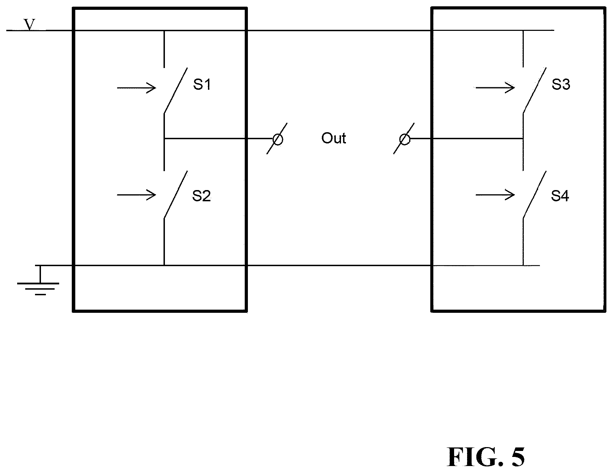

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. Fig. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. Fig. 5 shows a full-bridge switch bridge/ inverter. The switches S1 and S2 are controlled such that they are never closed at the same time. The switches S3 and S4 are controlled such that they are never closed at the same time. Alternatingly switches Sland S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi Specification or the Ki Specification.

The power transmitter controller 305 is in particular arranged to control the generation of the drive signal by the driver 301, and it can specifically control the power level of the drive signal by controlling the drive 301 to adapt a parameter of the drive signal. The power level of the power transfer signal may be adapted in response to the power control messages received from the power receiver 105 during the power transfer phase as will be described in more detail later.

The use of a resonance circuit including the transmitter coil 103 is well known to provide a more efficient power transfer in many scenarios. Furthermore, having a power receiver which also employs a resonance circuit, i.e. where the receiver coil 107 is part of a resonance circuit, may result in resonant power transfer which provides a number of advantages including a highly efficient power transfer and ease of control of the power transfer, such as e.g. by controlling the frequency of the drive signal.

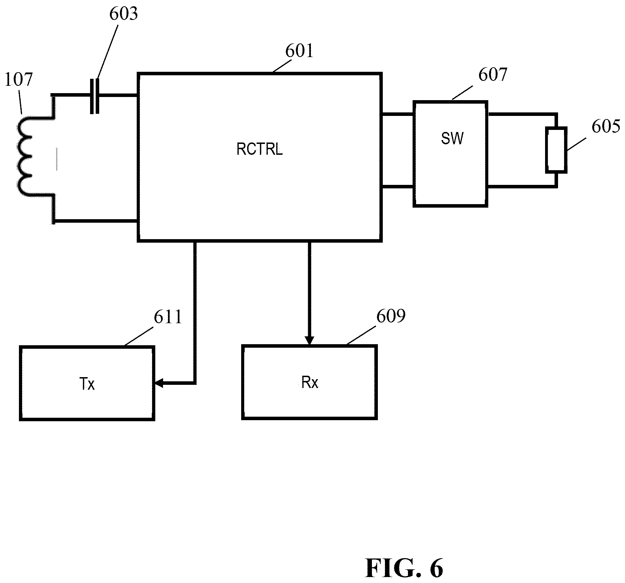

Fig. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits. Although, Fig. 6 and the following description will focus on an input resonance circuit being a series resonance circuit, it will be appreciated that in other embodiments the input resonance circuit may be a parallel resonance circuit. It will be appreciated that any suitable resonance circuit may be used including one including multiple inductors and/or capacitors.

The power receiver controller 601 couples the receiver coil 107 to a load 605 via a switch 607 which specifically may be capable of shorting and-or short circuiting the load 605. The switch 607 may typically also be arranged to fully decouple/ disconnect the load 605 from the power receiver. The power receiver controller 601 includes a power control path which converts the power extracted by the receiver coil 107 into a suitable supply for the load 605. In some embodiments, the power receiver controller 601 may provide a direct power path which simply connects the input resonance circuit to the switch 607 or load 605, i.e. the power path of the power receiver controller 601 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc.

The input resonance circuit may comprise the power receiver coil and one or more capacitors that are coupled in series. Further an input resonance circuit load may be coupled in series with the power receiver coil and one or more capacitors. In some embodiments, the input resonance circuit may comprise the power receiver coil and one or more capacitors that are coupled in parallel. Further an input resonance circuit load may be coupled in parallel with the power receiver coil and one or more capacitors.

The output signal of the input resonance circuit may be a signal applied/ provided to the input resonance circuit load. The output voltage of the input resonance circuit may be the voltage over the input resonance circuit load. The output current of the input resonance circuit may be the current provided to the input resonance circuit load. The input resonance circuit load typically corresponds to the load 605 of the power receiver and the intervening power path (which may e.g. include rectification and smoothing). It may also include e.g. internal circuitry of the power receiver that is powered from the power transfer signal.

It will be appreciated that for typical power paths, the load voltage/ signal corresponds directly to the output voltage/ signal of the input resonance circuit. For example, rectification and smoothing will result in a load voltage that is the same as the output voltage of the input resonance circuit (with perhaps some offset resulting from the power path conversion of the AC signal to a DC signal). Therefore, references to the output voltage/ signal of the input resonance circuit and references to the load voltage are used interchangeably based on the assumption that the power path maintains a direct relationship between these. Properties of one voltage/ signal accordingly translates directly to the other, and operations or considerations based on one of these apply (mutatis mutandis) equally to the other. The power receiver controller 601 may include various power receiver controller functionality required to perform power transfer, and in particular functions required to perform power transfer in accordance with the Qi or Ki Specifications.

During operation, the switch 607 may be arranged to repeatedly switch the load 605 in an out. For example, the load 605 may be a heating element that is continuously switched in and out to maintain a constant temperature. Such an approach may lead to very substantial load changes occurring at relatively frequent intervals which could result in overvoltage conditions. In the present case the power transfer system includes functionality for improving load change operation and mitigating disadvantageous effects and properties in connection with load changes.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

At regular, and typically frequent, intervals, the power receiver transmits a power control error message to the power transmitter. In some embodiments, a direct power setpoint change message may be transmitted indicating a desired absolute power level (rather than a relative error message). The power receiver 105 comprises functionality for supporting such a power control loop, e.g. the power transmitter may continuously monitor the power or voltage of a load signal provided to the load and detect whether this is above or below a desired value. It may at regular intervals generate a power control error message which requests that the power level of the power transfer signal is increased or decreased, and it may transmit this power control error message to the power transmitter.

When receiving a power control error message from the power receiver, the power transmitter may determine how the drive signal parameter should be modified to increase or decrease the power level of the power transfer signal as requested. It may then control and adapt the drive signal parameter accordingly.

A power control loop is accordingly employed which controls a power property of the power transfer signal to result in the desired operating point at the power receiver. The operation of the power transfer is thus controlled by a power control loop and the effective operation of this is critical to the performance of the system. Initializing or adapting the power control loop to the operation conditions is thus critical for optimum performance.

In order to support such operation, the power receiver and the power transmitter comprise functionality for bi-directional communication.

The power transmitter comprises a first receiver 307 arranged to receive messages from the power receiver and a first transmitter 309 arranged to transmit messages to the power receiver. Similarly, the power receiver comprises a second receiver 609 arranged to receive messages from the power receiver and a second transmitter 611 arranged to transmit messages to the power receiver.

Various approaches for communicating between a power transmitter and a power receiver are known and any suitable approach may be used in accordance with the preferences and requirements of the individual embodiment.

For example, the first transmitter 309 may be arranged to transmit data to the second receiver 609 by modulating the power transfer signal and the first receiver 307 may receive data from the second transmitter 611 by detecting load modulation of the power transfer signal. Similarly, the second receiver 609 may e.g. be arranged to decode and demodulate data modulated onto the power transfer signal and the second transmitter may be arranged to transmit data to the power transmitter 101 by load modulating the power transfer signal. In other embodiments, other approaches may be used, such as e.g. a separate communication function, such as an NFC communication function, may be employed in one or both directions.

The power transmitter 101 comprises a power controller 315 that implement at least some of the functions of the described power control loop. The power controller 315 is coupled to the first receiver 307 and is fed the power control error messages received from the power receiver 105. The power controller 315 is arranged to adapt a parameter of the power transfer signal to control the power level of the power transfer signal (this may typically be done via the power transmitter controller 305). Accordingly, in the example, the power transmitter 101 comprises a frequency controller 311 which is arranged to control a parameter of the power transfer signal that affects the power level of the power being transferred to power receiver.

The power control loop is arranged to dynamically change a parameter of the power transfer signal in response to the error signals, or it may in some embodiments dynamically change two (or possibly even more) parameters of the drive signal/ power transfer signal in response to the power control error signals.

The power control loop may adapt the power level by adapting a drive/ operating frequency of the drive signal, and thus of the power transfer signal. The use of resonance circuits in the power transmitter output and the power receiver input results in a power transfer function (e.g. power receiver load voltage Vload as a function of inverter/ drive signal voltage amplitude Vin) that is frequency dependent and with the power transfer levels depending on the frequency. The power level of the power transfer is typically more efficient at resonance and therefore the power levels may often be higher at such frequencies. Typically, a frequency range below (or above) a resonance peak of the power transfer level is used during power transfer with the frequency being adapted in response to the power control error messages. For an error message requesting an increased power level, the frequency is changed to be closer to the resonance frequency resulting in an increased power level. Conversely, for an error message requesting a decreased power level, the frequency is changed to be farther from the resonance frequency resulting in a decreased power level.

The power transmitter 101 comprises a frequency controller 311 which is arranged to control the operating frequency of the drive signal. During the power control operation, the power controller 315 may thus control the frequency controller 311 to adjust the operating frequency of the drive signal to increase and decrease the operating frequency in response to the power control error messages when the system is operating in the power control mode.

The power controller 315 may in addition in some embodiments be able to adapt other parameters of the drive signal that may affect the power level. In particular, in many embodiments, the power controller 315 may also be arranged to adapt the duty cycle of the drive signal. For example, to reduce the power level both the duty cycle may be reduced and the frequency may be moved farther from the resonance peak. Similarly, to increase the power level, the duty cycle may be increased and the frequency may be moved closer to the resonance peak. In some embodiments, other parameters may be varied, such as e.g. a voltage or current level/ amplitude of the drive signal.

When the power receiver load changes, the power control loop may accordingly adapt the parameters of the drive signal to provide a desired operating point. However, power control loop changes tend to inherently be quite slow and the power control loop tends to have low response times/ low pass frequency responses. This may e.g. be due to the requirement for stable and noise efficient operation, and also be caused by inherent lags and delays such as the time required for communicating power control error messages (and thus the associated low update rate of error messages). This may result in suboptimal transient response and indeed for very fast and significant load changes, the initial response may be as if the power control loop was not present. As a result, quick load changes and in particular load steps may result in step change in the EMF voltage induced in the power receiver coil 107 which may be undesired. In particular, an overvoltage condition/ transient may occur.

The power transmitter 101 and the power receiver 105 are however arranged to perform a specific load change operation which may mitigate and reduced such effects. In the approach, the power receiver and the power transmitter are arranged to implement a specific approach for improved load changes that may in particular be suitable for large and/or fast load changes, and which may e.g. be used in connection with load steps, such asmay occur in an airfryer when this switches the heat element on or off.

In the approach, the power receiver may transmit a load change message to the power transmitter indicating that e.g. a large load step/ change is to be performed. In response, the power transmitter may proceed to suspend the power control loop and to change the frequency to a specific frequency that is maintained substantially constant throughout the load step. As will be described in more detail in the following, the specific frequency is selected as a specific frequency that the inventors have realized may provide improved load change/step properties for the power transfer operation. The power transmitter may then transmit a load change acknowledge message to the power receiver to indicate that the power transmitter is ready for the load step/change. In response, the power receiver may proceed to perform the load step/ change. Subsequently, the power transmitter may proceed change the operating frequency back from the specific frequency to a variable frequency that can be adapted to be appropriate for the new operating point/ load. In particular, it may change the frequency back to a normal frequency operating range and restart the power control operation to control the parameters of the drive signal/ power transfer signal.

The power transmitter may thus in particular be arranged to suspend the power control loop in response to receiving the load change message and change to the specific load change frequency. Following the load change, the power transmitter may change the frequency back to a frequency in the power control loop operating range and restart the power control loop. In some embodiments, the change to the dedicated load change frequency may be performed while still allowing some power control loop function to operate. For example, only a frequency variation power control loop function may be suspended while other frequency loop function, such as a duty cycle power control loop may remain active throughout the load change operation. In some embodiments, the frequency variation power control loop may even remain active during the load change. For example, if the frequency power control loop is so slow that the impact on the frequency will be relatively small during the time it takes to perform the load change process, the frequency power control loop may be maintained throughout.

The approach may provide an improved load change, and in particular improved load step, performance with reduced transient and e.g. overvoltage conditions occurring in many scenarios.

In more detail, the load change process may start with the power receiver controller 601 determining that a load change for the load is upcoming. In the example, the load of the power receiver on the power transfer signal is not a constant load but is variable. For example, switching by the switch 607 may result in a variable load that may result large load steps, e.g. of potentially over 100W or even 1KW load steps. In some scenarios, the load may also have a static/ permanent component in addition to the variable load component.

The power receiver controller 601 may determine that a load change is pending/ upcoming in accordance with different algorithms and criteria in different embodiments. In many cases, the determination may be based on receiving an indication of such a change from the load 605. In some cases, the power receiver controller 601 may be arranged to determine various parameters/ characteristics and assess whether a load change is about to occur. In many embodiments, the power receiver controller 601 may control the switch 607 and thus when conditions are considered to be appropriate for a load change, the power receiver controller 601 may instead of directly performing the load change withhold the switching of load until load change acknowledge message is received. Thus, in many embodiments, the power receiver controller 601 may determine or detect that it would be appropriate to change the load/ perform a load step/ switch the switch 607. However, instead of directly performing the load change/ switch, the power receiver controller 601 may initiate the specific load change process.

For example, the power receiver may be an airfryer and the load 605 may be the heating element of the airfryer. The power receiver controller 601 may continuously measure the temperature and when this moves outside an acceptable range, the power receiver controller 601 may determine that it is appropriate to switch load (in or out as appropriate). However, instead of merely changing the load/ switch, the power receiver controller 601 starts the described load change approach.

When the power receiver controller 601 determines that a load change/ switch/ step is required or appropriate, it may control the second transmitter 611 to transmit a load change message to the power transmitter. The load change message thus indicates to the power transmitter that a load change is upcoming. It will be appreciated that many approaches of communicating such messages in a power transfer system may be used and that any suitable approach may be used.

The first receiver 307 may be arranged to receive the load change message from the power receiver. The first receiver 307 indicates this to the power controller 315 which in the specific example in response suspends at least the frequency part of the power control operation and further controls the frequency controller 311 to switch to a specific load change frequency for the duration of the load change operation/ process.

The frequency controller 311 is coupled to frequency determiner 313 which is arranged to determine and provide the load change frequency to the frequency controller 311. The load change frequency is selected to be a reduced load sensitivity operating frequency. The frequency controller 311 is then in response to the receipt of the load change message arranged to change the drive signal to this reduced load sensitivity operating frequency. In the specific example, the frequency controller 311 is further arranged to maintain this frequency until the power change process has finished/ the load has changed.

The reduced load sensitivity operating frequency may be a frequency for which the sensitivity to load variations is lower than for any frequency within the frequency operating range. The reduced load sensitivity operating frequency may specifically be a reduced input resonance circuit output voltage sensitivity operating frequency. The frequency may be one for which the sensitivity to load variations of the output of the input resonance circuit of the power receiver , and consequently typically also of a rectified and/or smoothed load voltage is reduced, e.g. with respect to the power transfer operating frequency, and specifically in many embodiments with respect to all frequencies within the power control frequency operating range. In many embodiments, the reduced load sensitivity operating frequency may a frequency for which the sensitivity to load variations is minimized (it may be a local or global minimum of a load sensitivity as a function of frequency). The load sensitivity may be an indication of a power receiver load voltage variation/ input resonance circuit output voltage variation as a function of a value of the power receiver load. T power receiver load voltage may be a voltage of a load signal generated by rectification and smoothing of an output signal of the input resonance circuit.

At the power receiver, the load voltage may be a voltage of a first signal generated by rectification and smoothing (typically using an energy reservoir such as a capacitor) of the signal induced in the input resonance frequency. This signal may be provided to a load of the power receiver. The reduced load sensitivity operating frequency may be a frequency for which the sensitivity of the load voltage to variations in a value of the loading of the first signal is at a (local or global) minimum.

The reduced load sensitivity operating frequency may be an operating frequency of the drive signal for which a sensitivity of the output voltage of the input resonance circuit of the power receiver to a load change introduced by the power receiver is reduced (with respect to an operating frequency prior to the load change/ receiving the load change message and/or to a frequency in the operating range of the power control loop). This may in particular be the case for embodiments where the input resonance circuit is a series resonance circuit. In some embodiments, the reduced load sensitivity operating frequency may be an operating frequency of the drive signal for which a sensitivity of the output current of the input resonance circuit of the power receiver to a load change introduced by the power receiver is reduced (with respect to an operating frequency prior to the load change/ receiving the load change message and/or to a frequency in the operating range of the power control loop). This may in particular be the case for embodiments where the input resonance circuit is a parallel resonance circuit.

The reduced load sensitivity operating frequency may be an operating frequency (of the drive signal/ power transfer signal) corresponding/ substantially equal to a coupled resonance frequency of the output resonance circuit. The reduced load sensitivity operating frequency may be an operating frequency (of the drive signal/ power transfer signal) corresponding/ substantially equal to a coupled resonance frequency of the output resonance circuit and input resonance circuit arrangement.

After the frequency controller 311 has switched to the reduced load sensitivity operating frequency and the frequency power control loop has been suspended, the first transmitter 309 transmits a load change acknowledge message to the power receiver. The load change acknowledge message indicates to the power receiver that the power transmitter has changed the operating frequency of drive signal/ the power transfer signal to the load change frequency/ reduced load sensitivity operating frequency. This indicates to the power receiver that the power transmitter is in a state in which it is ready for the load change and accordingly the power receiver proceeds to perform the load change. Thus, the first transmitter 309 may transmit a load change acknowledge message to the power receiver where it may be received by the second receiver 609. This load change acknowledge message is indicative of the load processor having changed the operating frequency to the reduced load sensitivity operating frequency and in response to this message the power receiver controller 601 and the switch 607 may accordingly proceed to perform the load change, i.e. specifically the switch 607 may be controlled to perform a switch (to either switch in or out the load 605).

The power transmitter may detect this load change (different approaches may be used as will be described later) and in response the frequency controller 311 changes the operating frequency from the reduced load sensitivity operating frequency to a load dependent operating frequency. The load dependent operating frequency is a frequency that may vary as a function of the load of the power transfer signal by the power receiver, and specifically it may depend on the load of the power receiver. The load dependent operating frequency is a variable frequency, and specifically it is a frequency that may be dependent on the operating characteristics of the power transfer, such as in particular may be dependent on the power level of the power transfer signal and/or the load of the power transfer signal by the power receiver.

In particular, the load dependent operating frequency may be a frequency controlled by the power control loop. Thus, the load dependent operating frequency may be under control of the power control loop. It may be a frequency that is variable in response to power control error messages received from the power receiver. Thus, after the load change has occurred, the power transmitter may switch operation back to a frequency in the power transfer operating range, and it may in particular restart the power control loop.

The initial load dependent operating frequency may for example be one that is determined in response to an expected or estimated value of the load of the power receiver. For example, the load change message may indicate a new load power level after the change and the frequency controller 311 may estimate a suitable operating frequency for this load. The frequency controller 311 may then return the drive signal to this frequency following the load change. The power control loop may then proceed to adjust the operating frequency in response to received error messages in order to finetune the frequency. In other embodiments, the initial load dependent operating frequency may simply be a fixed predetermined frequency, such as the mid-frequency of the operating band, and from this frequency the appropriate operating point/ frequency may be reached using the power control loop (thus the switch to a load dependent frequency may be a two stage process of first switching to a predetermined frequency and then adapting to a load dependent frequency, typically by allowing the power control operation to adapt the drive/ operating frequency).

The frequency determiner 313 may be arranged to provide the reduced load sensitivity operating frequency as a frequency for which the sensitivity to load variations is lower than for any frequency within the frequency operating range. The inventors have realized that the sensitivity of the power transfer signal and the load voltage at the power receiver may vary significantly as a function of frequency. They have further realized that the lowest sensitivity is in most practical applications outside the frequency power control loop operating range as the properties required for power control (the change in power level) are incompatible with the requirement for lowest sensitivity. Indeed, this property tends to exist at resonance frequencies which tend to be unsuitable for power control as a monotonic dependency on frequency is typically not the case for these (at least not for all loads). The inventors have further realized that improved load step/ change operation can be achieved by a process that interrupts the normal operation during load changes to change the operating frequency to a frequency that reduces or minimizes the impact of load changes.

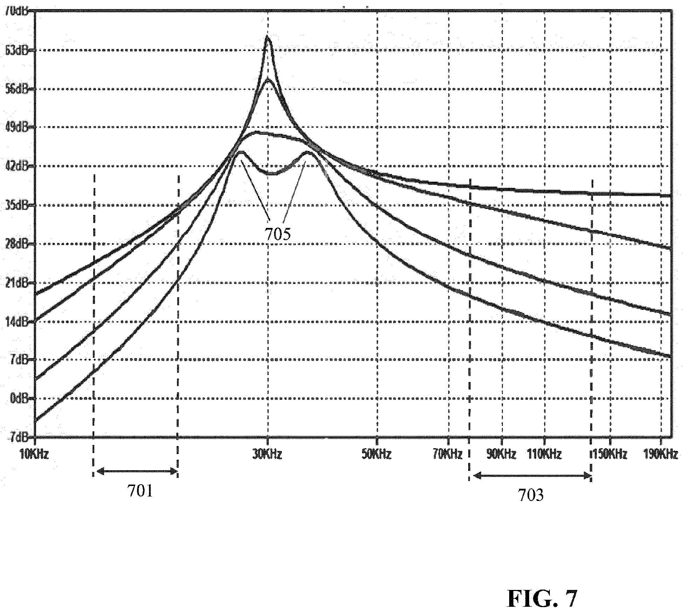

Fig. 7 illustrates examples of a power transfer function for a power transfer between a power transmitter and a power receiver. The power transfer function specifically reflect the rectified and smoothed output load voltage (amplitude) of the input resonance circuit/ power receiver coil induced voltage/ EMF as a function of frequency of the power transfer signal/ drive signal. The transfer function may equally be considered to indicate the power level of the power transfer/ power transfer signal/drive signal. Indeed, for a resistive load component, the power level and load voltage have a monotonic relationship (and a logarithmic representation of power and voltage will correspond).

As can be seen, for low frequencies the load voltage and the associated power level is monotonically increasing with frequency, and similarly for high frequencies the voltage and associated power level may be monotonically decreasing for increasing frequency. Accordingly, an operating frequency range may be defined as a range for which the voltage/ power level is a monotonic function with respect to frequency 701, 703. Such an operating range may be at higher or lower frequencies. The power controller 315 may accordingly perform power control by varying the frequency within these ranges.

The inventors have further realized that whereas the exact transfer curve (shape and values) may depend heavily on the load provided by the power receiver on the power transfer signal, the dependency varies across the frequencies and some frequencies exhibit much higher dependencies than others. They have further realized that this may be exploited by the described approach of the power transmitter switching to a reduced load sensitivity operating frequency prior to a load change and returning to load dependent frequencies after the load change.

Fig. 7 illustrates the power transfer function for different loads. As can be seen, higher resistive loads (higher power/ lower load resistance values) tend to result in a single peak transfer function whereas lower resistive loads (lower power/ higher load resistance values) tend to result in a double peak transfer circuit reflecting the individual resonance behavior of the power transmitter output resonance circuit and the power receiver input resonance circuit. Further, as Fig. 7 illustrates, the transfer function is heavily dependent on the load but with this sensitivity being substantially lower at some frequencies than at other frequencies. In particular, frequencies exist for which this load sensitivity is minimized, and indeed even to the point where the transfer function is almost independent of the load value.

The frequency determiner 313 may in some embodiments be arranged to determine the reduced load sensitivity operating frequency based on the transfer function. In some embodiments, the reduced load sensitivity operating frequency may be determined as a minimum load sensitivity frequency.

In some embodiments, the frequency determiner 313 may be arranged to determine the reduced load sensitivity operating frequency as a predetermined frequency. Indeed, in some embodiments, the frequency determiner 313 may store a fixed/ static/ predetermined reduced load sensitivity operating frequency that may be recalled and provided to the frequency controller 311. Such a predetermined reduced load sensitivity operating frequency may reflect average characteristics and properties, such as average nominal properties of the power receiver, a nominal relative position of the power receiver, etc. For example, during design and/or manufacturing various measurements may be made using a nominal power receiver at a nominal position. The frequency for which load steps lead to the minimum voltage steps at the output of the input resonance circuit and/or the power receiver load/ receiver coil may be determined as a suitable reduced load sensitivity operating frequency and stored in the power transmitter(s). In some cases, the operation may be performed for different types of power receivers and a reduced load sensitivity operating frequency may be determined and stored for each of a plurality of types of power receiver. During initialization of a power transfer, the power receiver may indicate to the power transmitter which type it is, and the frequency determiner 313 may in response identify the corresponding stored reduced load sensitivity operating frequency and provide this to the frequency controller 311 when appropriate.

In some embodiments, the frequency determiner 313 may determine the reduced load sensitivity operating frequency as a predetermined function of one or more power transfer parameters. The power transfer parameter may for example be a coupling factor, a power level, a relative position of the power receiver, etc.

For example, during manufacturing the reduced load sensitivity operating frequencies may be determined while varying a range of different power transfer parameters. Based on the different measurements, an equation may be derived or fitted to provide the reduced load sensitivity operating frequency as a function of the one or more power transfer parameters. This equation/ function may then be stored at the frequency determiner 313. During operation, the frequency determiner 313 may measure the required operating parameters and may then evaluate the function to determine the reduced load sensitivity operating frequency using the measured power transfer parameters. For example, a coupling factor may be determined and a function dependent on the coupling factor may be evaluated to generate the reduced load sensitivity operating frequency.

In some embodiments, a plurality of different functions/ equations may be determined for different types of power receivers and the appropriate function may be selected for the current power receiver type.

In many embodiments, the frequency determiner 313 may be arranged to perform measurements to dynamically determine a reduced load sensitivity operating frequency for the current power transmitter and power receiver setup, including determining the reduced load sensitivity operating frequency to reflect the current operating conditions, such as e.g. the current positioning of the power receiver.

Such a determination may in particular be performed by measuring and considering the power transfer function, such as e.g. reflected by the power or input resonance circuit output voltage or the load voltage as a function of the drive signal frequency/ the power transfer signal frequency. In particular, the inventors have realized that reduced load sensitivity operating frequencies may advantageously be determined as a resonance frequency of such a transfer function. The resonance frequencies may in particular be determined for a low loading of the resonance circuits. i.e. for a high resistive load of the receiver resonance circuit/ high Q of the resonance circuit(s). For example, Fig. 7 illustrates that the lowest variability with load variations occur at the peaks of the transfer function for high Q 705. These frequencies correspond to the resonance frequencies of the transfer function and correspond to the (coupled) resonance frequencies of the output and input resonance frequencies.

In the described system, the frequency determiner 313 may comprise functionality for determining the reduced load sensitivity operating frequency based on a detection/ measurement of one or more resonance frequencies for the output resonance circuit (and/or equivalently for the drive signal) when it is coupled to the power receiver, and specifically to the receiver coil 107 and the input resonance circuit. This may correspond to determining the reduced load sensitivity operating frequency based on resonance frequencies of the power transfer function, and specifically based on peaks of the power transfer function (for higher Q values). In particular, the reduced load sensitivity operating frequency may be determined as a coupled resonance frequency of the output resonance circuit (when coupled to the input resonance circuit).

The frequency determiner 313 may arranged to determine at least one coupled operating resonance frequency for the output resonance circuit/ the drive signal/ the power transfer function. In the following the references will mainly be to coupled resonance frequency of the output resonance circuit but it will be appreciated that such references can be replaced by references to (coupled) resonance frequencies of the power transfer function, drive signal and/or power transfer signal.

The determination may specifically be based on measurements during a resonance measurement time interval where the coupled resonance frequency is a resonance frequency for the output resonance circuit in the presence of the power receiver, i.e. when the transmitter coil 103 is coupled to the receiver coil 107 of the power receiver.

The coupled resonance frequency accordingly reflects an effective resonance frequency of the output resonance circuit when the transmitter coil 103 is coupled to the receiver coil 107. Due to the coupling of the two coils, the effective inductance of the transmitter coil 103 is different than the self-inductance of the transmitter coil 103 when it is not coupled to any receiver coil 107. Similarly, the effective inductance of the receiver coil 107 is different than the self-inductance of the receiver coil 107 when this is not coupled to any transmitter coil 103. As a result, the effective resonances will be different to the self-resonances when there is no coupling. Furthermore, due to the coupling of the two coils, and thus the two resonance circuits, the drive signals will effectively experience two (different) resonance frequencies, i.e. due to the coupling the output resonance circuit will effectively have two resonance frequencies and with these being different from the self (non-coupled) resonance frequency of the output resonance circuit.

The frequency determiner 313 may proceed to determine the reduced load sensitivity operating frequency as (one of) the detected coupled resonance frequency(ies).

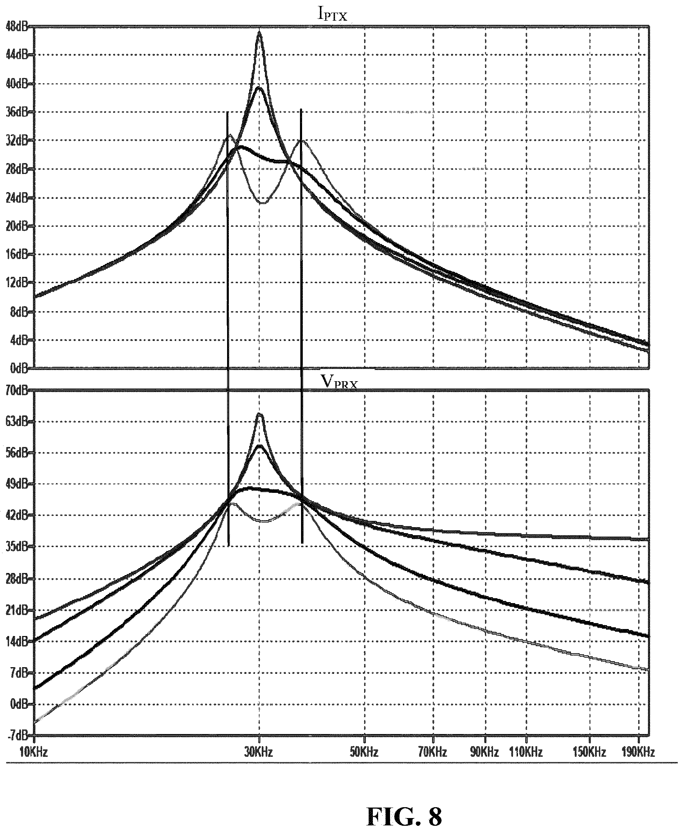

In some embodiments, the resonance detector 307 may be arranged to detect the coupled resonance frequency during the resonance measurement time interval by varying the frequency of the drive signal, and specifically it may perform a frequency sweep over a range of frequencies which may correspond to the frequency interval in which the coupled resonance frequency is expected to lie, or within which it may be considered that the coupling factor is sufficiently high to provide acceptable power transfer. The resonance detector 307 may then monitor the drive signal and it may detect an extreme of e.g. the current or voltage amplitude. For example, for series resonance circuits, the resonance detector 307 may control the driver 301 to vary the frequency over a range and with a fixed voltage amplitude. It may then measure the current amplitude for the different frequencies and determine the coupled resonance frequency for which the highest current amplitude is determined. Fig. 8 illustrates how the power transmitter coil current/ current of the drive signal I_{PTX} corresponds to the voltage of the power receiver coil/ input resonance circuit output V_{PRX}.

As another example, the resonance detector 307 may detect when the phase difference between the current and voltage of the drive signal is zero (or close to zero), i.e. when the loading by the output resonance circuit is purely resistive.

In some embodiments, the frequency sweep of the drive signal may be from higher frequencies towards lower frequencies and the coupled resonance frequency may be determined as the first detected frequency for which a resonance criterion (e.g. extrema for current or voltage amplitude of the signal or zero phase difference between voltage and current) is met. Thus, instead of e.g. detecting the global extreme, the first local extreme may be detected.

Such an approach may allow the highest coupled resonance frequency of the two to be detected. This may be advantageous in some embodiments as the sensitivity to load variations tend to be lower frequency errors around the higher coupled resonance frequency than for the lower coupled resonance frequency.

The detection of the coupled resonance frequency or frequencies based on the power transfer function, and in particular based on peak detection and/or frequency sweep (e.g. detection zero phase difference resonance points) may typically advantageously be performed for high Q factor conditions.

In many embodiments, the quality factor of the input resonance circuit is during the resonance measurement operation/ measurement time interval not less than ten, and typically it may be higher. This may result in the detection of the coupled resonance frequency(ies) to be reliable and reasonably accurate, and thus in the determined reduced load sensitivity operating frequency reflecting low load sensitivity.

In some embodiments, the high Q during the resonance measurement time interval may be ensured by the Q value for the input resonance circuit always being above ten, i.e. by the power receiver being designed for the input resonance circuit to always have a quality factor above 10. However, this is typically in contrast with the desire to provide the appropriate power to the load. For example, for Ki systems, the loading of an input resonance circuit by typical power values result in Q values that are typically less than 5, and often less than 2.

In many embodiments, the power receiver may accordingly be arranged to switch the mode of operation from a lower quality factor mode for at least some time outside the resonance measurement time interval to a higher quality factor mode with a Q value of at least 10 during the resonance measurement time interval. This may allow more accurated determination of a suitable reduced load sensitivity operating frequency. Thus, the power receiver may be arranged to switch from a power transfer mode in which the quality factor is not constrained to be above 10, and during which it may indeed be substantially less than 10 in order to allow efficient power transfer, to a measurement mode during the resonance measurement time interval where the quality factor is no less than ten.

This may for example be achieved by the switch 607. For example, if the power path couples the switch 607 and the load 605 directly to the input resonance circuit, the switch may couple the normal load 605 to the input resonance circuit outside of the resonance measurement time interval(s). However, during the resonance measurement time interval(s), the switch 607 may decouple the load 605. For an input parallel resonance circuit, the switch 607 may for example disconnect the load 605 so that no current is drawn from the input resonance circuit. In contrast, for an input series resonance circuit, the switch 607 may decouple the load by short circuiting the load 605 thereby short circuiting the power transfer input resonance circuit during the resonance measurement time interval.

In some embodiments, such a variation of the quality factor may occur without the power receiver comprising specific functionality. For example, in some embodiments, the load may inherently provide essentially a short-circuit during start up which may allow for a resonance measurement time interval prior to power transfer inherently having a high Q input resonance circuit. For example, when the load is a motor it may start up almost as a short circuit. As another example, when a rectifier and a large output capacitor is present in the power path, this will also behave almost like a short circuit when the capacitor is discharged.

In many embodiments, the resonance measurement time interval (or at least one resonance measurement time interval) may be prior to the power transfer. Specifically, the determination of the reduced load sensitivity operating frequency may be performed during an initialization of a power transfer operation. Thus, prior to the power transfer, the power transmitter may determine a suitable reduced load sensitivity operating frequency for the specific power receiver and the specific positioning of the power receiver. It may then store this reduced load sensitivity operating frequency and start the power transfer ready to perform load changes using the determined reduced load sensitivity operating frequency.

During the pre-power transfer coupling factor estimation, the power receiver may be entered into a measurement mode for the coupled resonance frequency detection. Specifically, the switch 607 may short circuit the load in order to provide a high quality factor for the input resonance circuit. When the system enters the power transfer phase, the power receiver may be switched back to normal power transfer operating mode, and specifically the short circuit may be removed.

In some embodiments, the approach for determining the reduced load sensitivity operating frequency may alternatively or additionally be applied during the power transfer phase. In many embodiments in which the determination is performed during a power transfer phase, the system may be arranged to operate in a time slotted mode with the measurements and coupled resonance frequency detection being performed during measurement time intervals. The resonance measurement time interval may specifically be performed during such measurement time intervals of a repeating time frame that further includes at least one power transfer time interval during which power is transferred to the power receiver.

In such embodiments, the system may thus utilize time division during the power transfer phase. In particular, detection of the coupled resonance frequencies and the power transfer may e.g. be performed in separate time intervals thereby allowing the interference between these to be reduced substantially.

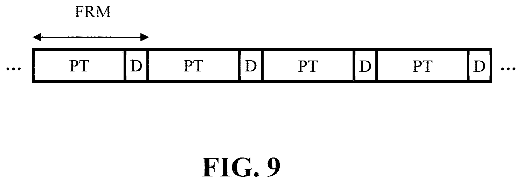

In the example, the driver 301 and the transmitter coil 103 are during the power transfer intervals arranged to generate an electromagnetic power transfer signal for the purpose of transferring power to the power receiver. In addition, the drive signal may during a measurement time interval be used to detect the coupled resonance frequencies. The power transmitter may employ a repeating time frame for the drive signal during the power transfer phase where the time frame comprises at least one power transfer time interval and at least one resonance measurement time interval. An example of such a repeating time frame is illustrated in Fig. 9 where power transfer time intervals are indicated by PT and measurement time intervals are indicated by D (the time intervals may also be referred to as Detection time intervals). In the example, each time frame FRM comprises only one resonance measurement time interval and one power transfer time interval and these (as well as the time frame itself) have the same duration in each frame. However, it will be appreciated that in other embodiments, other time intervals may also be included in a time frame (such as e.g. communication intervals) or a plurality of resonance measurement time intervals and/or power transfer time intervals may be included in each time frame. Furthermore, the duration of the different time intervals (and indeed the time frame itself) may in some embodiments vary dynamically.

In the approach, the measurements and the power transfer are thus separated in the time domain thereby resulting in reduced cross-interference from the power transfer to the measurement. Thus, the variability and uncertainty resulting from variations in the operating conditions for the power transfer can be isolated from the measurement and estimation resulting in a more reliable and accurate estimation process. Further, it allows the drive signal to be generated (and optimized) for the detection of the coupled resonance frequency. In particular, it allows the resonance detector 307 to perform a frequency sweep and to perform suitable operations for this detection.

Furthermore, it allows the power receiver to specifically adapt to provide improved or optimum properties for the detection. In particular, in many embodiments, the power receiver may switch from a power operating mode during the power transfer time intervals during which the load is coupled to the input resonance circuit (and thus the quality factor of the input resonance circuit is low) to a measurement mode where it is ensured that the quality factor of the input resonance circuit is high, e.g. by the switch 607 shorting the load.

The time slotted approach may thus allow or facilitate the performance of the coupling factor estimation during the power transfer phase.

The described approach may provide improved operation, and in particular improved load switching operation, in many embodiments. It may for example reduce a voltage variation/ step or a current variation/ step happening as a result of a load step which is too fast to be compensated by the power control loop.

The Inventors have realized that for coupled resonance circuits, the power transfer behavior including in particular the behavior of the input resonance circuit is such that it is possible to reduce the variations at the output of the input resonance circuit that happen in response to load changes. Specifically, they have realized that this operation and behavior is frequency dependent, and that the frequency can be used to control the desired behavior. Further, they have realized that adapting the frequency to have different behaviors for different operations, improved overall performance can be achieved.

When the load of the power receiver changes, such as e.g. when the resistance of the load changes, the power transfer operating point changes to result in an operating point where voltages and currents in the components of the input resonance circuit of the power receiver and the output resonance circuit of the power transmitter change to reflect the changed load. This may further result in a change in the drive signal. In other words, the load puts a constraint on the power transfer path which together with typically a constraint of the drive signal (such as a fixed voltage amplitude) result in an almost instantaneous change to a new operating point with suitable currents and voltages of the circuits being such that the constraints are met. Subsequently, the power control loop adapts the drive signal, and thus the operating point, such that the power transfer provides the desired power to the load. However, the instantaneous change may result in undesired transients if the load change is too fast for the power control loop to compensate. This may for example result in overvoltage transients being provided to the load.

Thus, when the power receiver load changes fast and/or by a large amount, a new operating point of the power transfer results. However, the inventors have realized that for the reduced load sensitivity frequency this change may occur with a reduced, and in some cases with substantially no (such as described when the reduced load frequency is set to coupled resonance frequency), change in the load voltage/ output voltage of the input resonance circuit.

For example, in a case where a load step occurs with the operating frequency being set to a coupled resonance frequency, the load voltage may remain substantially constant. However, as the load changes abruptly (i.e. the power extracted by the load changes abruptly), the current of the load also changes significantly and abruptly. For example, if the power changes from, say 20W to 2000W (e.g. a heating element is switched on), the load current abruptly changes by a factor of 100, and the voltage stays constant.

In order to adapt to this changed load, the power extracted from the transmitters source (the mains) will also change, and indeed the extracted power may change by a corresponding factor (i..e by a factor of 100 in the specific example). However, the change does not necessarily result in only the current of the power receiver coil changing but rather typically both the coil voltages and currents of the primary and secondary side will change. This is due to change of total impedance that is present and visible from the output resonance circuit.

The whole power transmission system including the resonant circuits will accordingly adapt to a new operating point matching the changed load. However, this may occur such that the output voltage of the input resonance circuit, and consequently the load voltage, is substantially constant despite the change in load. This may be achieved by setting the resonance frequency to the coupled resonance frequency which is a characteristic operating point of loosely coupled resonant coil systems.

In more detail, for the example of the figures in which the input resonance circuit is a series resonance circuit, the output current and the currents in the receiver coil 107 and the capacitor 603 are the same and the output voltage is given as the combination/ sum of the voltages over the receiver coil 107 and the capacitor 603.

The components of the output resonance circuit and the input resonance circuit are all passive components and for these components to adapt to a different power, the current/voltage need to be adapted (similar as with resistors). The inductors and capacitors both behave more or less linearly such that when the current increases, the voltage also increases. This is similar as a resistor, but with a phase difference between voltage and current.

The output voltage of the input resonance circuit is thus the summation of two different voltages that have a phase offset. At the reduced load sensitivity operating frequency or coupled resonance frequency, this operating point may be such that the voltages compensate each other such that the resulting output voltage of the input resonance circuit does not change (or at least changes by a less amount).

In particular, at the reduced load sensitivity operating frequency, the phase difference between the coil voltage and the capacitor voltage may be 180° degrees, so the imaginary components may mostly cancel out, and with this being independent of the load attached (but dependent on the frequency. At the specific resonance frequency, the input resonance circuit and output resonance circuit may be considered to act like a load independent voltage divider. At all other frequencies the load will have an impact on the resonant circuit, because the phase is not exactly 0 or 180°,

So, for the output resonance circuit and input resonance circuit, the voltage at the input stays the same, and the current increases for increased current load at the power receiver. The voltage over the power receiver coil is higher, since the current is also higher. The voltage over the capacitor also changes, since that current is also higher, but the voltage is in counterphase to the coil voltage. Accordingly, at the primary side, the voltages are more or less balanced. The corresponding/ complementary phenomenon occurs at the input resonance circuit. The total resonant circuit combination essentially acts as a feed through, but the internal voltages change to accommodate the change in power in what is a passive process. Thus, the component voltages change but compensate such that output voltage of the input resonance circuit is substantially constant.

In particular, for both inductors and capacitors, the voltage increases for an increasing current (i.e. by increasing the power withdrawn by the load). However, the voltages have opposite phases at appropriate frequencies and accordingly these changes may (at least partially) cancel out.

The system may thus provide improved transient performance by controlling a frequency such that the voltage differences at the output of the input resonance circuit, and thus typically at the load, are reduced.

For the output resonance circuit and/or the input resonance circuit being a parallel resonance circuit, the voltages over the components rather than the currents are the same. The description provided above with reference to series resonance circuits are applicable with the exchange of the references to current and voltage. Thus, the approach may be used to provide load adaptations with substantially constant current.

However, minimum voltage sensitivity frequencies may also occur for parallel resonance circuits. Such a point may occur between two minimum current sensitivity frequencies. This minimum voltage sensitivity frequencies may for example be identified by a test process that changes the load and measures voltage transients for different drive frequencies. Similarly, for a series resonance circuit embodiment, minimum current sensitivity frequencies can be identified and used as described.

The power transmitter may in different embodiments use different approaches for determining that the power receiver has performed the load change.

In some embodiments, the determination may be implicit in that it will be expected that the power receiver performs the load change within a given time interval and this time interval may be measured by a timer. Thus, when the timer expires, the frequency controller 311 may proceed to designate the load change to have occurred and it may proceed to change the drive signal frequency to the operating range/ a load dependent frequency and to restart the power control loop. The timer may for example be started when the load change message is transmitted, and the timer expiry may thus indicate that a certain, e.g. predetermined, time interval since the transmission of the load change message has occurred and this may cause the load change to be designated to have occurred.

In other embodiments, the frequency controller 311 may be arranged to measure the load of the power transfer signal and to detect that the load change has been performed by the power receiver if a (corresponding) load change is detected for the power transfer signal. Thus, after the transmission of the load change message, the frequency controller 311 may monitor the power level of the drive signal, and thus the loading of the power transfer signal. When a change is detected of a suitable size, the frequency controller 311 may designate that the indicated load change has occurred.

In some embodiments, the power receiver may be arranged to transmit a load change performed message to the power transmitter after it has performed the load change and the power transmitter may then determine that the load change has occurred in response to receiving the load change performed message. Thus, the power transmitter may when receiving a load change message switch to the reduced load sensitivity operating frequency and suspend the frequency power control loop until it receives a load change performed message. When this message is received, the power transmitter returns the drive signal frequency to within an operating range and restarts the frequency power control loop.

In some embodiments, the frequency determiner 313 may be arranged to determine the reduced load sensitivity operating frequency once, and then subsequently use this. In some embodiments, it may e.g. be determined as part of the initialization of a power transfer and a new reduced load sensitivity operating frequency may possibly be determined whenever a new power transfer is started. This frequency may in some embodiments be used throughout the power transfer operation and a new reduced load sensitivity operating frequency may not be determined until the next power transfer operation is performed.

In some embodiments, the frequency determiner 313 may be arranged to initiate determination of the reduced load sensitivity operating frequency in response to the detection of a change in the operating point of the power transfer. In some embodiments, during a power transfer phase, the frequency determiner 313 may continuously monitor the operating point. It may measure one or more parameters, such as for example a coupling factor or coupling factor indicator, a foreign object loss level, a relative position of the power receiver relative to the power transmitter, etc. The frequency determiner 313 may determine a reduced load sensitivity operating frequency for the system operating at a given operating point. If however, an operating point changes by more than a given threshold, the frequency determiner 313 may detect this change and in response initiate a new determination of a reduced load sensitivity operating frequency (e.g. using any of the previously described approaches). Once the new reduced load sensitivity operating frequency has been determined this may replace the previous reduced load sensitivity operating frequency and accordingly an updated reduced load sensitivity operating frequency suitable for the new operating point is then used.

As previously described, the power control loop may be a control loop that only adapts the frequency of the drive signal/ power transfer signal. During the power change time interval, the power transmitter may as described keep the frequency constant at the reduced load sensitivity operating frequency and suspend this frequency (adapting/ variable) power control loop.

However, in some embodiments, the power transmitter may be arranged to operate a power control loop that adapts another parameter than the drive signal frequency. For example, such a non-frequency (adapting/ variable) power control loop may adapt a drive signal voltage amplitude, a drive signal current amplitude, and/or a drive signal duty cycle. In some embodiments, such a non-frequency power control loop may be operated during the power change time interval, and specifically may be operated during the time when the frequency power control loop is suspended. In such a case, power control is still being performed during the power change interval while at the same time ensuring that the impact of the load change is reduced or even minimized. Such an approach may provide improved overall load change operation.

The non-frequency power control loop may be one that operates only when the frequency power control loop is suspended, i.e. only during load change intervals. However, in other embodiments, the non-frequency power control loop may also operate outside of the load change intervals and specifically may operate continuously and/or simultaneously with the frequency power control loop.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

In some embodiments, the reduced load sensitivity operating frequency may be determined as a coupled resonance frequency of the output resonance circuit. In such a case, all references to a reduced load sensitivity operating frequency may be replaced by a reference to a coupled resonance frequency. Thus, in such embodiments, there may be provided a power transmitter for wirelessly providing power to a power receiver via an inductive power transfer signal; the power transmitter comprising: an output resonance circuit comprising a transmitter coil and at least one capacitor; a driver arranged to generate a drive signal for the output resonance circuit to generate the inductive power transfer signal; a frequency determiner arranged to provide a coupled resonance frequency of the output resonance frequency, a receiver arranged to receive a load change message from the power receiver, the load change message being indicative of a load change by the power receiver being upcoming; a frequency controller arranged to change an operating frequency of the drive signal to the coupled resonance frequency in response to receiving the load change message; a transmitter arranged to transmit a load change acknowledge message to the power receiver, the load change acknowledge message being indicative of the frequency controller having changed the operating frequency to the coupled resonance frequency; wherein the frequency controller is further arranged to change the operating frequency from the coupled resonance frequency to a load dependent operating frequency in response to determining that the power receiver has performed the load change.

In some embodiments, the term "reduced load sensitivity operating frequency" may be replaced by the term "coupled resonance frequency".

The coupled resonance frequency may be a resonance frequency of the arrangement of the output resonance circuit of the power transmitter and the input resonance circuit of the power receiver. The coupled resonance frequency may be a resonance frequency of the output resonance circuit of the power transmitter when (inductively/ electromagnetically) being coupled to the input resonance circuit of the power receiver.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. The terms "first", "second" are (typically/ generally and otherwise indicated by the context) used merely as labels and as such are not intended to have any limiting meaning or effect. Reference signs in the claims are provided merely as a clarifying example shall not be construed as limiting the scope of the claims in any way.

## Claims

1. A power transmitter (101) for wirelessly providing power to a power receiver (105) via an inductive power transfer signal; the power transmitter (101) comprising:
an output resonance circuit comprising a transmitter coil (103) and at least one capacitor (303);
a driver (301) arranged to generate a drive signal for the output resonance circuit to generate the inductive power transfer signal;
**characterized in** further comprising:
a frequency determiner (313) arranged to provide a reduced load sensitivity operating frequency for the drive signal,
a receiver (307) arranged to receive a load change message from the power receiver (105), the load change message being indicative of a load change by the power receiver (105) being upcoming;
a frequency controller (311) arranged to change an operating frequency of the drive signal to the reduced load sensitivity operating frequency in response to receiving the load change message;
a transmitter (309) arranged to transmit a load change acknowledge message to the power receiver (105), the load change acknowledge message being indicative of the frequency controller (311) having changed the operating frequency to the reduced load sensitivity operating frequency;
wherein the frequency controller (311) is further arranged to change the operating frequency from the reduced load sensitivity operating frequency to a load dependent operating frequency in response to determining that the power receiver (105) has performed the load change.

2. The power transmitter of claim 1 comprising a power controller (315) arranged to implement a frequency power control loop by adapting the operating frequency in response to power control error messages received from the power receiver (105), and wherein the power controller (315) is arranged to suspend the frequency power control loop in response to receiving the load change message and to restart the frequency power control loop in response to the frequency controller (311) determining that the power receiver (105) has performed the load change.

3. The power transmitter of any previous claim wherein the frequency controller (311) is arranged to determine that the power receiver has performed the load change in response to at least one of:
an expiry of a timer;
a detection of a change of power extracted from the power transfer signal;
a detection of a power level change of the drive signal; and
the receiver (307) receiving a load change performed message from the power receiver (105).

4. The power transmitter of any previous claim wherein the reduced load sensitivity operating frequency is a resonance frequency of a transfer function for the power transfer.

5. The power transmitter of claim 4 wherein the frequency determiner (313) is arranged to determine the reduced load sensitivity operating frequency as a coupled resonance frequency for the output resonance circuit, the coupled resonance frequency being a resonance frequency for the output resonance circuit for the transmitter coil (103) being coupled to a receiver coil (107) of a power transfer input resonance circuit of the power receiver (105).

6. The power transmitter of claim 5 wherein the frequency determiner (313) is arranged to control the driver (301) to generate the drive signal to have a varying frequency and to determine the coupled resonance frequency dependent on at least one of a voltage of the drive signal, a current of the drive signal, and a phase difference between the voltage of the drive signal and the current of the drive signal.

7. The power transmitter of claim 5 or 6 wherein the frequency determiner (313) is arranged to control the driver (301) to perform a frequency sweep of the drive signal from higher frequencies towards lower frequencies, and to determine the coupled resonance frequency as a first detected frequency for which a resonance criterion for the drive signal is met.

8. The power transmitter of any of claims 5-7 wherein the frequency determiner (313) is arranged to initiate determination of the reduced load sensitivity operating frequency in response to the detection of a change in an operating point of the power transfer.

9. The power transmitter of any previous claim wherein the frequency determiner (313) is arranged to determine the reduced load sensitivity operating frequency as a predetermined function of at least one power transfer parameter.

10. The power transmitter of any previous claim wherein the power controller (315) is further arranged to implement a non-frequency power control loop by adapting a parameter of the drive signal other than the operating frequency in response to power control error messages received from the power receiver when the drive signal is operated at the reduced load sensitivity operating frequency.

11. A power receiver for a wireless power transfer system comprising a power transmitter (101) transferring power to the power receiver (105) using an inductive power transfer signal, the power receiver (105) comprising:
an input resonance circuit comprising at least one capacitor and a power receiver coil (107) arranged to extract power from the power transfer signal by induction to provide power to a variable load (605, 607);
**characterized in** further comprising:
a determiner (601) arranged to determine that a load change for the variable load is upcoming;
a transmitter (611) arranged to transmit a load change message to the power transmitter (101), the load change message being indicative of the load change being upcoming;
a receiver (609) arranged to receive a load change acknowledge message from the power transmitter (101), the load change acknowledge message being indicative of the power transmitter (101) having changed an operating frequency of the power transfer signal to a reduced load sensitivity operating frequency;
a load controller (601) arranged to initiate the load change in response to receiving the load change acknowledge message.

12. A wireless power transfer system comprising the power transmitter of any of claims 1-10 and the power receiver of claim 11.

13. A method of operation for a power transmitter (101) wirelessly providing power to a power receiver (105) via an inductive power transfer signal; the power transmitter (101) comprising:
an output resonance circuit comprising a transmitter coil (103) and at least one capacitor (303);
and the method comprising:
generating a drive signal for the output resonance circuit to generate the inductive power transfer signal;
**characterized in** further comprising:
providing a reduced load sensitivity operating frequency for the drive signal,
receiving a load change message from the power receiver (105), the load change message being indicative of a load change by the power receiver (105) being upcoming;
changing an operating frequency of the drive signal to the reduced load sensitivity operating frequency in response to receiving the load change message;
transmitting a load change acknowledge message to the power receiver (105), the load change acknowledge message being indicative of the frequency controller (311) having changed the operating frequency to the reduced load sensitivity operating frequency; and
changing the operating frequency from the reduced load sensitivity operating frequency to a load dependent operating frequency in response to determining that the power receiver (105) has performed the load change.

14. A method of operation for a power receiver of a wireless power transfer system comprising a power transmitter (101) arranged to transfer power to the power receiver (105) using an inductive power transfer signal, the method comprising:
extracting power from the power transfer signal by induction to provide power to a variable load (605, 607);
**characterized in** further comprising:
determining that a load change for the variable load is upcoming;
transmitting a load change message to the power transmitter (101), the load change message being indicative of the load change being upcoming;
receiving a load change acknowledge message from the power transmitter (101), the load change acknowledge message being indicative of the power transmitter (101) having changed an operating frequency of the power transfer signal to a reduced load sensitivity operating frequency; and
initiating the load change in response to receiving the load change acknowledge message.

15. A method of operation for a wireless power transfer system comprising a power transmitter (101) transferring power to a power receiver (105) inductive power transfer signal, the method comprising the power transmitter performing the method of claim 13 and the power receiver (105) performing the method of claim 14.

## Patentansprüche

1. Leistungssender (101) zum drahtlosen Bereitstellen von Leistung an einen Leistungsempfänger (105) über ein induktives Leistungsübertragungssignal; wobei der Leistungssender (101) Folgendes umfasst:
einen Ausgangsresonanzkreis, der eine Senderspule (103) und mindestens einen Kondensator (303) umfasst;
einen Treiber (301), der angeordnet ist, um ein Treibersignal für den Ausgangsresonanzkreis zu erzeugen, um das induktive Leistungsübertragungssignal zu erzeugen;
**dadurch gekennzeichnet, dass** er weiter umfasst:
einen Frequenzbestimmer (313), der angeordnet ist, um eine Betriebsfrequenz mit verringerter Lastempfindlichkeit für das Treibersignal bereitzustellen,
einen Empfänger (307), der angeordnet ist, um eine Laständerungsnachricht von dem Leistungsempfänger (105) zu empfangen, wobei die Laständerungsnachricht eine bevorstehende Laständerung durch den Leistungsempfänger (105) anzeigt;
eine Frequenzsteuereinheit (311), die angeordnet ist, um eine Betriebsfrequenz des Treibersignals als Antwort auf den Empfang der Laständerungsnachricht auf die Betriebsfrequenz mit verringerter Lastempfindlichkeit zu ändern;
einen Sender (309), der angeordnet ist, um eine Bestätigungsnachricht über die Laständerung an den Leistungsempfänger (105) zu senden, wobei die Bestätigungsnachricht über die Laständerung anzeigt, dass die Frequenzsteuereinheit (311) die Betriebsfrequenz auf die Betriebsfrequenz mit verringerter Lastempfindlichkeit geändert hat;
wobei die Frequenzsteuereinheit (311) weiter angeordnet ist, um die Betriebsfrequenz von der Betriebsfrequenz mit verringerter Lastempfindlichkeit auf eine lastabhängige Betriebsfrequenz zu ändern, als Antwort auf die Bestimmung, dass der Leistungsempfänger (105) die Laständerung durchgeführt hat.

2. Leistungssender nach Anspruch 1, umfassend eine Leistungssteuereinheit (315), die angeordnet ist, um eine Frequenzregelschleife für die Leistung zu implementieren, indem die Betriebsfrequenz als Antwort auf von dem Leistungsempfänger (105) empfangene Leistungsregelfehlermeldungen angepasst wird, und wobei die Leistungssteuereinheit (315) angeordnet ist, um die Frequenzregelschleife für die Leistung als Antwort auf den Empfang der Laständerungsnachricht zu unterbrechen und die Frequenzregelschleife für die Leistung als Antwort darauf neu zu starten, dass die Frequenzsteuereinheit (311) bestimmt, dass der Leistungsempfänger (105) die Laständerung durchgeführt hat.

3. Leistungssender nach einem der vorstehenden Ansprüche, wobei die Frequenzsteuereinheit (311) angeordnet ist, um zu bestimmen, dass der Leistungsempfänger die Laständerung durchgeführt hat, als Antwort auf mindestens eines von:
einem Ablauf eines Timers;
einer Detektion einer Änderung der aus dem Leistungsübertragungssignal entnommenen Leistung;
einer Detektion einer Pegeländerung der Leistung des Treibersignals; und
dem Empfang einer Nachricht über die durchgeführte Laständerung durch den Empfänger (307) von dem Leistungsempfänger (105).

4. Der Leistungstransmitter nach einem vorstehenden Anspruch, wobei die Betriebsfrequenz mit reduzierter Lastempfindlichkeit eine Resonanzfrequenz einer Übertragungsfunktion für die Leistungsübertragung ist.

5. Leistungssender nach Anspruch 4, wobei der Frequenzbestimmer (313) angeordnet ist, um die Betriebsfrequenz mit verringerter Lastempfindlichkeit als eine gekoppelte Resonanzfrequenz für den Ausgangsresonanzkreis zu bestimmen, wobei die gekoppelte Resonanzfrequenz eine Resonanzfrequenz für den Ausgangsresonanzkreis ist, wenn die Senderspule (103) an eine Empfängerspule (107) eines Eingangsresonanzkreises zur Leistungsübertragung des Leistungsempfängers (105) gekoppelt ist.

6. Leistungssender nach Anspruch 5, wobei der Frequenzbestimmer (313) angeordnet ist, um den Treiber (301) so zu steuern, dass er das Treibersignal mit einer variierenden Frequenz erzeugt, und um die gekoppelte Resonanzfrequenz in Abhängigkeit von mindestens einem von einer Spannung des Treibersignals, einem Strom des Treibersignals und einer Phasendifferenz zwischen der Spannung des Treibersignals und dem Strom des Treibersignals zu bestimmen.

7. Leistungssender nach Anspruch 5 oder 6, wobei der Frequenzbestimmer (313) angeordnet ist, um den Treiber (301) so zu steuern, dass er einen Frequenzhub des Treibersignals von höheren Frequenzen hin zu niedrigeren Frequenzen durchführt, und um die gekoppelte Resonanzfrequenz als eine erste detektierte Frequenz zu bestimmen, für die ein Resonanzkriterium für das Treibersignal erfüllt ist.

8. Leistungssender nach einem der Ansprüche 5-7, wobei der Frequenzbestimmer (313) angeordnet ist, um die Bestimmung der Betriebsfrequenz mit verringerter Lastempfindlichkeit als Antwort auf die Detektion einer Änderung eines Betriebspunkts der Leistungsübertragung einzuleiten.

9. Leistungssender nach einem der vorstehenden Ansprüche, wobei der Frequenzbestimmer (313) angeordnet ist, um die Betriebsfrequenz mit verringerter Lastempfindlichkeit als eine vorbestimmte Funktion mindestens eines Leistungsübertragungsparameters zu bestimmen.

10. Leistungssender nach einem der vorstehenden Ansprüche, wobei die Leistungssteuereinheit (315) weiter angeordnet ist, um eine von der Frequenz unabhängige Regelschleife für die Leistung zu implementieren, indem ein Parameter des Treibersignals außer der Betriebsfrequenz als Antwort auf Leistungsregelfehlermeldungen angepasst wird, die von dem Leistungsempfänger empfangen werden, wenn das Treibersignal mit der Betriebsfrequenz mit verringerter Lastempfindlichkeit betrieben wird.

11. Leistungsempfänger für ein drahtloses Leistungsübertragungssystem, umfassend einen Leistungssender (101), der Leistung an den Leistungsempfänger (105) unter Verwendung eines induktiven Leistungsübertragungssignals überträgt, wobei der Leistungsempfänger (105) Folgendes umfasst:
einen Eingangsresonanzkreis, der mindestens einen Kondensator und eine Leistungsempfängerspule (107) umfasst, die angeordnet ist, um durch Induktion Leistung aus dem Leistungsübertragungssignal zu entnehmen, um Leistung an eine variable Last (605, 607) bereitzustellen;
**dadurch gekennzeichnet, dass** er weiter umfasst:
einen Bestimmer (601), der angeordnet ist, um zu bestimmen, dass eine Laständerung für die variable Last bevorsteht;
einen Sender (611), der angeordnet ist, um eine Laständerungsnachricht an den Leistungssender (101) zu senden, wobei die Laständerungsnachricht anzeigt, dass die Laständerung bevorsteht;
einen Empfänger (609), der angeordnet ist, um eine Bestätigungsnachricht über die Laständerung von dem Leistungssender (101) zu empfangen, wobei die Bestätigungsnachricht über die Laständerung anzeigt, dass der Leistungssender (101) eine Betriebsfrequenz des Leistungsübertragungssignals auf eine Betriebsfrequenz mit verringerter Lastempfindlichkeit geändert hat;
eine Laststeuereinheit (601), die angeordnet ist, um die Laständerung als Antwort auf den Empfang der Bestätigungsnachricht über die Laständerung einzuleiten.

12. Drahtloses Leistungsübertragungssystem, umfassend den Leistungssender nach einem der Ansprüche 1-10 und den Leistungsempfänger nach Anspruch 11.

13. Betriebsverfahren für einen Leistungssender (101), der einen Leistungsempfänger (105) drahtlos über ein induktives Leistungsübertragungssignal mit Leistung versorgt; der Leistungssender (101) umfasst:
einen Ausgangsresonanzkreis, der eine Senderspule (103) und mindestens einen Kondensator (303) umfasst;
und wobei das Verfahren umfasst:
Erzeugen eines Treibersignals für den Ausgangsresonanzkreis, um das induktive Leistungsübertragungssignal zu erzeugen;
**dadurch gekennzeichnet, dass** es weiter umfasst:
Bereitstellen einer Betriebsfrequenz mit verringerter Lastempfindlichkeit für das Treibersignal,
Empfangen einer Laständerungsnachricht von dem Leistungsempfänger (105), wobei die Laständerungsnachricht eine bevorstehende Laständerung durch den Leistungsempfänger (105) anzeigt;
Ändern einer Betriebsfrequenz des Treibersignals auf die Betriebsfrequenz mit verringerter Lastempfindlichkeit als Antwort auf den Empfang der Laständerungsnachricht;
Senden einer Bestätigungsnachricht über die Laständerung an den Leistungsempfänger (105), wobei die Bestätigungsnachricht über die Laständerung anzeigt, dass die Frequenzsteuereinheit (311) die Betriebsfrequenz auf die Betriebsfrequenz mit verringerter Lastempfindlichkeit geändert hat; und
Ändern der Betriebsfrequenz von der Betriebsfrequenz mit verringerter Lastempfindlichkeit auf eine lastabhängige Betriebsfrequenz als Antwort auf die Bestimmung, dass der Leistungsempfänger (105) die Laständerung durchgeführt hat.

14. Verfahren zum Betreiben eines Leistungsempfängers eines drahtlosen Leistungsübertragungssystems, umfassend einen Leistungssender (101), der angeordnet ist, um Leistung an den Leistungsempfänger (105) unter Verwendung eines induktiven Leistungsübertragungssignals zu übertragen, wobei das Verfahren Folgendes umfasst:
Entnehmen von Leistung aus dem Leistungsübertragungssignal durch Induktion, um Leistung an eine variable Last (605, 607) bereitzustellen;
**dadurch gekennzeichnet, dass** es weiter umfasst:
Bestimmen, dass eine Laständerung für die variable Last bevorsteht;
Senden einer Laständerungsnachricht an den Leistungssender (101), wobei die Laständerungsnachricht anzeigt, dass die Laständerung bevorsteht;
Empfangen einer Bestätigungsnachricht über die Laständerung von dem Leistungssender (101), wobei die Bestätigungsnachricht über die Laständerung anzeigt, dass der Leistungssender (101) eine Betriebsfrequenz des Leistungsübertragungssignals auf eine Betriebsfrequenz mit verringerter Lastempfindlichkeit geändert hat; und
Einleiten der Laständerung als Antwort auf den Empfang der Bestätigungsnachricht über die Laständerung.

15. Verfahren zum Betreiben eines drahtlosen Leistungsübertragungssystems, umfassend einen Leistungssender (101), der Leistung an einen Leistungsempfänger (105) über ein induktives Leistungsübertragungssignal überträgt, wobei das Verfahren umfasst, dass der Leistungssender das Verfahren nach Anspruch 13 durchführt und der Leistungsempfänger (105) das Verfahren nach Anspruch 14 durchführt.

## Revendications

1. Transmetteur de puissance (101) pour alimenter sans fil un récepteur de puissance (105) par l'intermédiaire d'un signal de transfert de puissance inductive ; le transmetteur de puissance (101) comprenant :
un circuit de résonance de sortie comprenant une bobine de transmetteur (103) et au moins un condensateur (303) ;
un pilote (301) agencé pour générer un signal de pilotage pour le circuit de résonance de sortie pour générer le signal de transfert de puissance inductive ;
**caractérisé en ce qu'**il comprend en outre :
un dispositif de détermination de fréquence (313) agencé pour fournir une fréquence de fonctionnement à sensibilité de charge réduite pour le signal de pilotage,
un récepteur (307) agencé pour recevoir un message de changement de charge du récepteur de puissance (105), le message de changement de charge indiquant un changement de charge par le récepteur de puissance (105) étant imminent ;
un dispositif de commande de fréquence (311) agencé pour changer une fréquence de fonctionnement du signal de pilotage à la fréquence de fonctionnement à sensibilité de charge réduite en réponse à la réception du message de changement de charge ;
un transmetteur (309) agencé pour transmettre un message d'acquittement de changement de charge au récepteur de puissance (105), le message d'acquittement de changement de charge indiquant que le dispositif de commande de fréquence (311) a changé la fréquence de fonctionnement vers la fréquence de fonctionnement à sensibilité de charge réduite ;
dans lequel le dispositif de commande de fréquence (311) est en outre agencé pour changer la fréquence de fonctionnement de la fréquence de fonctionnement à sensibilité de charge réduite vers une fréquence de fonctionnement dépendant de la charge en réponse à la détermination que le récepteur de puissance (105) a réalisé le changement de charge.

2. Transmetteur de puissance selon la revendication 1, comprenant un dispositif de commande de puissance (315) agencé pour mettre en œuvre une boucle de commande de puissance en fréquence en adaptant la fréquence de fonctionnement en réponse à des messages d'erreur de commande de puissance reçus à partir du récepteur de puissance (105), et dans lequel le dispositif de commande de puissance (315) est agencé pour suspendre la boucle de commande de puissance en fréquence en réponse à la réception d'un message de changement de charge et pour redémarrer la boucle de commande de puissance en fréquence en réponse au dispositif de commande de fréquence (311) déterminant que le récepteur de puissance (105) a réalisé le changement de charge.

3. Transmetteur de puissance selon une quelconque revendication précédente, dans lequel le dispositif de commande de fréquence (311) est agencé pour déterminer que le récepteur de puissance a réalisé le changement de charge en réponse à au moins un parmi :
une expiration d'une minuterie ;
une détection d'un changement de puissance extraite à partir du signal de transfert de puissance ;
une détection d'un changement de niveau de puissance du signal de pilotage ; et
le récepteur (307) recevant un message de changement de charge réalisé à partir du récepteur de puissance (105).

4. Transmetteur de puissance selon une quelconque revendication précédente, dans lequel la fréquence de fonctionnement à sensibilité de charge réduite est une fréquence de résonance d'une fonction de transfert pour le transfert de puissance.

5. Transmetteur de puissance selon la revendication 4, dans lequel le dispositif de détermination de fréquence (313) est agencé pour déterminer la fréquence de fonctionnement à sensibilité de charge réduite comme une fréquence de résonance couplée pour le circuit de résonance de sortie, la fréquence de résonance couplée étant une fréquence de résonance pour le circuit de résonance de sortie pour la bobine de transmetteur (103) étant couplée à une bobine de récepteur (107) d'un circuit de résonance d'entrée de transfert de puissance du récepteur de puissance (105).

6. Transmetteur de puissance selon la revendication 5 dans lequel le dispositif de détermination de fréquence (313) est agencé pour commander le pilote (301) pour générer le signal de pilotage pour avoir une fréquence variable et pour déterminer la fréquence de résonance couplée en fonction d'au moins une parmi une tension du signal de pilotage, un courant du signal de pilotage et une différence de phase entre la tension du signal de pilotage et le courant du signal de pilotage.

7. Transmetteur de puissance selon la revendication 5 ou 6, dans lequel le dispositif de détermination de fréquence (313) est agencé pour commander le pilote (301) pour réaliser un balayage de fréquence du signal de pilotage de fréquences plus élevées à des fréquences plus basses, et pour déterminer la fréquence de résonance couplée comme une première fréquence détectée pour laquelle un critère de résonance du signal de pilotage est respecté.

8. Transmetteur de puissance selon l'une quelconque des revendications 5-7, dans lequel le dispositif de détermination de fréquence (313) est agencé pour amorcer une détermination de la fréquence de fonctionnement à sensibilité de charge réduite en réponse à la détection d'un changement dans un point de fonctionnement du transfert de puissance.

9. Transmetteur de puissance selon une quelconque revendication précédente, dans lequel le dispositif de détermination de fréquence (313) est agencé pour déterminer la fréquence de fonctionnement à sensibilité de charge réduite comme une fonction prédéterminée d'au moins un paramètre de transfert de puissance.

10. Transmetteur de puissance selon une quelconque revendication précédente dans lequel le dispositif de commande de puissance (315) est en outre agencé pour mettre en œuvre une boucle de commande de puissance non fréquentielle en adaptant un paramètre du signal de pilotage autre que la fréquence de fonctionnement en réponse à des messages d'erreur de commande de puissance reçus à partir du récepteur de puissance lorsque le signal de pilotage fonctionne à la fréquence de fonctionnement à sensibilité de charge réduite.

11. Récepteur de puissance pour un système de transfert de puissance sans fil comprenant un transmetteur de puissance (101) transférant de la puissance au récepteur de puissance (105) en utilisant un signal de transfert de puissance inductive, le récepteur de puissance (105) comprenant :
un circuit de résonance d'entrée comprenant au moins un condensateur et une bobine de récepteur de puissance (107) agencés pour extraire de la puissance du signal de transfert de puissance par induction pour fournir de la puissance à une charge variable (605, 607) ;
**caractérisé en ce qu'**il comprend en outre :
un dispositif de détermination (601) agencé pour déterminer qu'un changement de charge pour la charge variable est imminent ;
un transmetteur (611) agencé pour transmettre un message de changement de charge au transmetteur de puissance (101), le message de changement de charge indiquant que le changement de charge est imminent ;
un récepteur (609) agencé pour recevoir un message d'acquittement de changement de charge à partir du transmetteur de puissance (101), le message d'acquittement de changement de charge indiquant que le transmetteur de puissance (101) a changé une fréquence de fonctionnement du signal de transfert de puissance vers une fréquence de fonctionnement à sensibilité de charge réduite ;
un dispositif de commande de charge (601) agencé pour amorcer le changement de charge en réponse à la réception du message d'acquittement du changement de charge.

12. Système de transfert de puissance sans fil comprenant le transmetteur de puissance selon l'une quelconque des revendications 1-10 et le récepteur de puissance selon la revendication 11.

13. Procédé de fonctionnement pour un transmetteur de puissance (101) alimentant sans fil un récepteur de puissance (105) par l'intermédiaire d'un signal de transfert de puissance inductive ; l'émetteur de puissance (101) comprenant :
un circuit de résonance de sortie comprenant une bobine de transmetteur (103) et au moins un condensateur (303) ;
et le procédé comprenant :
la génération d'un signal de pilotage pour le circuit de résonance de sortie pour générer le signal de transfert de puissance inductive ;
**caractérisé en ce qu'**il comprend en outre :
la fourniture d'une fréquence de fonctionnement à sensibilité de charge réduite pour le signal de pilotage,
la réception d'un message de changement de charge du récepteur de puissance (105), le message de changement de charge indiquant un changement de charge par le récepteur de puissance (105) étant imminent ;
le changement d'une fréquence de fonctionnement du signal de pilotage à la fréquence de fonctionnement à sensibilité de charge réduite en réponse à la réception du message de changement de charge ;
la transmission d'un message d'acquittement de changement de charge au récepteur de puissance (105), le message d'acquittement de changement de charge indiquant que le dispositif de commande de fréquence (311) a changé la fréquence de fonctionnement vers la fréquence de fonctionnement à sensibilité de charge réduite ; et
le changement de la fréquence de fonctionnement de la fréquence de fonctionnement à sensibilité de charge réduite vers une fréquence de fonctionnement dépendant de la charge en réponse à la détermination que le récepteur de puissance (105) a réalisé le changement de charge.

14. Procédé de fonctionnement d'un récepteur de puissance d'un système de transfert de puissance sans fil comprenant un transmetteur de puissance (101) agencé pour transférer de la puissance au récepteur de puissance (105) en utilisant un signal de transfert de puissance inductive, le procédé comprenant :
l'extraction de puissance à partir du signal de transfert de puissance par induction pour fournir de la puissance à une charge variable (605, 607) ;
**caractérisé en ce qu'**il comprend en outre :
la détermination qu'un changement de charge pour la charge variable est imminent ;
la transmission d'un message de changement de charge au transmetteur de puissance (101), le message de changement de charge indiquant que le changement de charge est imminent ;
la réception d'un message d'acquittement de changement de charge à partir du transmetteur de puissance (101), le message d'acquittement de changement de charge indiquant que le transmetteur de puissance (101) a changé une fréquence de fonctionnement du signal de transfert de puissance vers une fréquence de fonctionnement à sensibilité de charge réduite ; et
l'amorçage du changement de charge en réponse à la réception du message d'acquittement du changement de charge.

15. Procédé de fonctionnement pour un système de transfert de puissance sans fil comprenant un transmetteur de puissance (101) transférant de la puissance à un récepteur de puissance (105) par signal de transfert de puissance inductive, le procédé comprenant le transmetteur de puissance réalisant le procédé selon la revendication 13 et le récepteur de puissance (105) réalisant le procédé selon la revendication 14.
